# EUROPEAN PATENT SPECIFICATION

(11) **EP 1 736 347 B1**
(45) Date of publication and mention of the grant of the patent: **03.12.2008**
(21) Application number: 05105292.6
(22) Date of filing: 16.06.2005
(51) Int. Cl.: B60K 7/00

(54) **Electric hub motor**
Elektrischer Radnabenmotor
Moteur électrique au moyen de roue

(43) Date of publication of application: 27.12.2006
(73) Proprietor: Mao, Fengxiang, Xu Hui District, Shanghai 200233 (CN); Tho, Kee Ping, Kun Shan, Jiang Su 215300 (CN)
(72) Inventor: Mao, Fengxiang, Xu Hui District, Shanghai 200233 (CN); Tho, Kee Ping, Kun Shan, Jiang Su 215300 (CN)
(74) Representative: Gervasi, Gemma

(56) References cited:
- DE-A1- 10 338 659
- US-A- 3 812 928
- US-B1- 6 328 123
- US-B1- 6 358 176

## Description

### Technical Field

The present invention relates to an electromotor, more specifically, to a hub motor in which a motor directly drives the hub to rotate. A hub motor according to the preamble of claim 1 is disclosed in US-A-3 812 928 or DE 103 38 659 A.

### Background Art

Motors in which the motor directly drives the hub to rotate (hub motors) are extensively used for electric bicycles and other rotating mechanisms. The outer rotor of an existing hub motor directly drives the hub housing to rotate, but because a low rotational speed of the motor is required, the bulk of the motor is usually larger and the torque is smaller. In another hub motor, its rotational speed is relatively higher, and the rotation of its hub housing is driven by a reducer mechanism, e.g., a planetary reduction gear drive mechanism. However, due to usage of conventional inner-rotor motor, the motor shaft is connected directly with the reducer mechanism while the stator coil of the motor is wound on the outer rotor, the diameter of the inner rotor is smaller, and the output power per unit weight (volume) cannot be further increased. Alternatively, when a higher rotational speed is adopted to achieve this purpose, then technical difficulties and efficiency deterioration inevitablely occur.

### Summary

The technical problem to be settled by this invention is to provide a hub motor having higher output power, relatively lower rotational speed and high efficiency with the same bulk.

To achieve the above-mentioned object, the hub motor of this invention includes:
- a motor shaft, which is fixed and non-rotational;
- a hub housing, which is connected to the motor shaft via bearings;
- a stator of the motor with winding, which is fixedly connected to the motor shaft, wherein the hub motor further includes:
   - an outer rotor of the motor; and
   - a quasi-planet reduction gear drive mechanism, which includes a sun gear, several planet gears, a ring gear and a planet carrier, wherein the sun gear is fixedly connected to the outer rotor of motor, and the planet gears drive the hub housing to rotate.

Moreover, the rotating shaft of the planet gear is fixed on the planet carrier, while the planet carrier is fixedly connected to the motor shaft.

Yet moreover, the ring gear and the hub housing of the hub motor of this invention are connected via a one-way clutch.

Furthermore, the slot hole of the stator core adopts variable section too, further improving the specific power of motor; Furthermore, a ring gear cover is provided on the opening side of the ring gear, and fixed with the ring gear ensuring reliable lubrication for the mechanism.

The hub motor of this invention adopts outer-rotor motor, in which the outer rotor rotates and is directly connected to the reducer mechanism,. Therefore, the output power per unit weight (volume) is greater, as compared with other electric hubs of the same power, the bulk of the hub motor of this invention is relatively smaller, thus it has very high use value. In addition, when used for electric bicycle, in case electric power is exhausted or man power is needed to drive for energy saving, the planetary reduction gear drive mechanism and the outer rotor of motor do not rotate accordingly. In this way, the power required for rotating the hub housing is reduced substantially, thus making it more convenient to use the electric bicycle equipped with the hub motor of the present invention.

### Description of Figures

Figure 1 is a schematic diagram of the hub motor provided by the invention.
Figure 2 is a schematic diagram of the planetary reduction gear drive mechanism of the hub motor provided by the invention.
Figure 3 is a schematic diagram of the main body of the steel sheet of an existing electromotor.
Figure 4 is the A-A cross-sectional profile of Figure 3.
Figure 5 is a schematic diagram of the basic type silicon steel sheet of the stator of the hub motor of the invention.
Figure 6 is the schematic diagram of the variable type silicon steel sheet of the stator of the hub motor of the invention.
Figure 7 is an end view of the main body of the silicon steel sheets of the stator of the hub motor of the invention.
Figure 8 is a schematic diagram of the coil-wound silicon steel sheets of an embodiment of the invention.
Figure 9 is a schematic diagram of the coil-wound silicon steel sheets of another embodiment of the invention.

### Embodiments

The following detailed description of the embodiments of the invention may be understood with reference to the accompanying drawings.

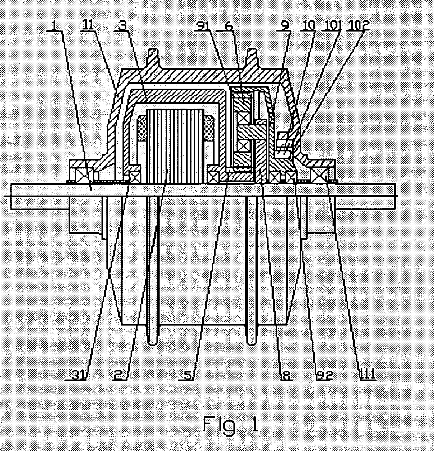

See Figure 1, the hub motor provided by the invention includes a motor shaft 1, a stator (with wound coil) 2, an outer rotor 3, a sun gear 5, planet gears 6, a planet carrier 8, a ring gear 9, an one-way clutch 10, and a hub housing 11. The motor shaft 1 is fixed, and the stator 2 is fixedly connected with the motor shaft 1. The outer rotor 3 is connected to motor shaft 1 via bearing 31. When the motor is power-on, the outer rotor 3 rotates. The outer rotor 3 is connected to the sun gear 5, thus it drives the sun gear 5 to rotate. The sun gear 5, planet gear 6 and planet carrier 8 constitute a quasi-planet reduction gear drive mechanism. The rotational shaft 61 of the planet gear 6 is fixed on the planet carrier 8, while the planet carrier 8 is fixedly connected to the motor shaft. The ring gear 9 is disc-shaped and contains an inner gear, by which the ring gear engages with the planet gear 6, therefore the planet gear 6 can drive the ring gear 9 to rotate. The ring gear 9 is connected to the hub housing 11 via the one-way clutch 10. The hub housing 11 is connected to the motor shaft 1 via bearing 111.

The one-way clutch 10 can adopt a commonly used one-way clutch, with which the ring gear 9 can only drive the hub housing 11 to rotate in one direction. When the ring gear 9 rotates, it is connected to the hub housing 11, and the rotating ring gear 9 can drive the hub housing 11 to rotate; contrarily, when the hub housing 11 rotates, it is separated from the ring gear 9, and the hub housing 11 does not drive the ring gear 9 to rotate. In this embodiment, the one-way clutch 10 adopts a ratchet structure, which contains an outer gear 101 and an inner gear 102. There are two claws on the inner gear 102 (not shown). The outer gear 101 is a ratchet containing inner tooth. The claws can engage with the inner tooth, ensuring one-way rotation. The inner gear 102 is fixed with the ring gear 9, while the outer gear 101 is fixedly connected to the hub housing 11.

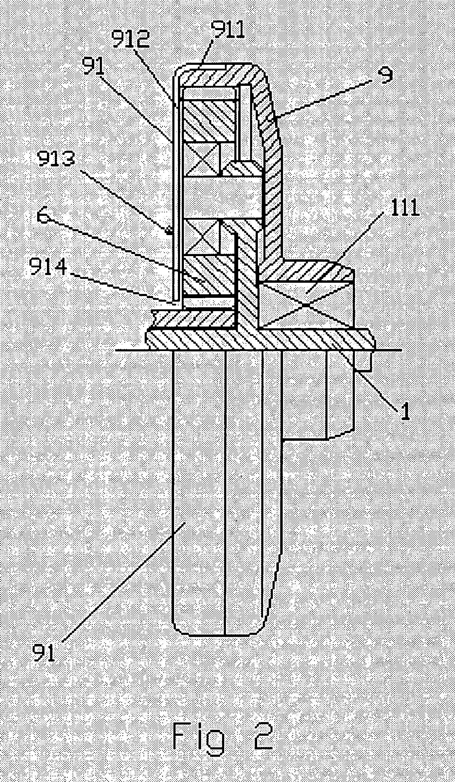

See Figure 2, a ring gear cover 91 is provided on the left side (opening side) of the ring gear 9, and the ring gear cover 91 is bowl shaped, it has a side 911 and a bottom 912, and a middle hole 913 in its center. The side 911 is fixed with the outer periphery of the ring gear 9, the bottom 912 runs parallel with and is close to the left side of the ring gear 9, e.g., the distance between them is 1-2mm.

Besides, in order to further improve sealing performance, a sealing ring 914 is provided between the outer surface of the ring gear cover and the neighboring part (e.g., the motor housing), for further preventing the lubricating grease from leaking.

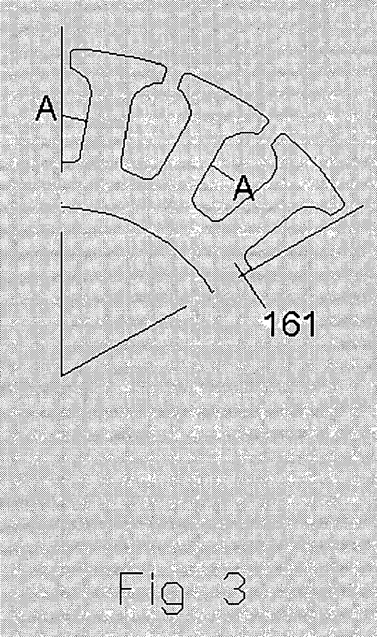

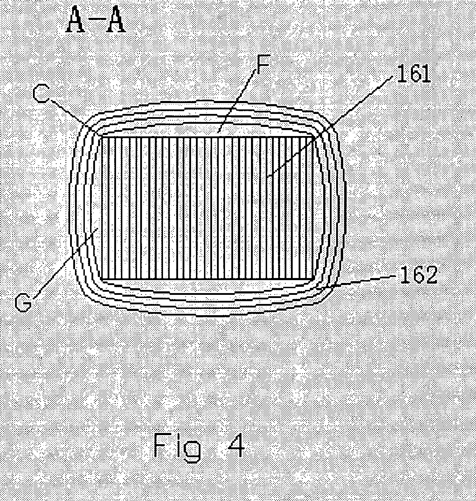

Moreover, the stator of an existing electromotor has an iron core made of multi-piece silicon steel sheet wound with coils. see Figure 3 and Figure 4, slot holes with gaps are formed by punching in the periphery of the existing silicon steel sheet 161, the slot holes are used for receiving the wound coil 162. Because the above-mentioned holes in all silicon steel sheets 161 are the same, the cross section of the wound coil 162 is a rectangle, in this way, there are four right angles C. Because the wire of the coil always has a certain hardness, in this way, while winding, it will form certain spaces F, G on both sides of the above-mentioned rectangle. Because of the above-mentioned space, the magnetic force induction produced by the rotor or stator of the motor is reduced, and certainly the efficiency of the motor is lowered.

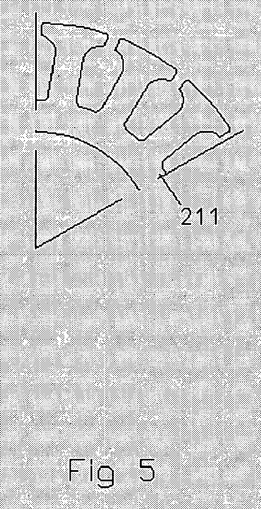

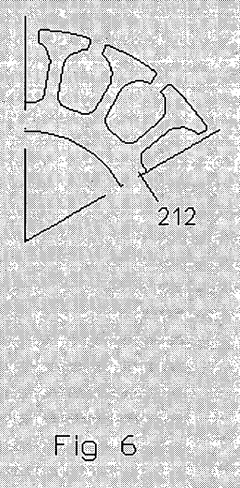

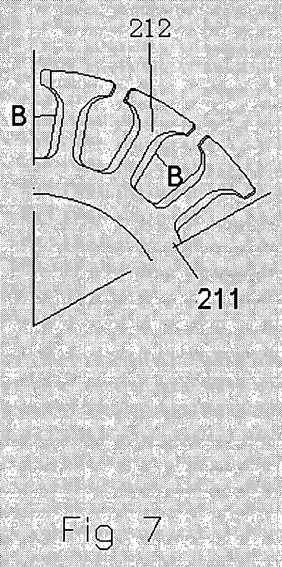

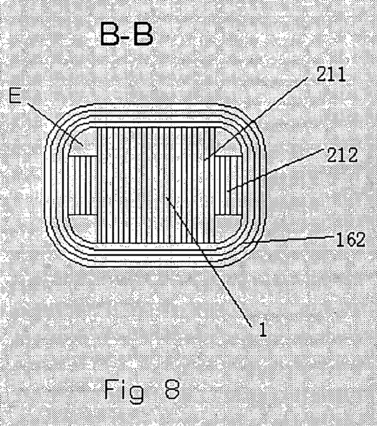

In order to improve the efficiency of the motor, the invention divides the silicon steel sheets into basic type silicon steel sheets and variable type silicon steel sheets, see Fig. 5, Fig. 6 , Fig. 7 and Fig. 8. The hub motor of the invention includes a housing, a rotor and a stator. The stator 2 is formed by stacking the basic type silicon steel sheets 211 (see Fig. 5) and variable type silicon steel sheets 212 (see Fig. 6). Among them, there are more basic silicon steel sheets 211, which jointly make up of the main part of the magnetic induction of the electromotor, and in the periphery of the basic type silicon steel sheets 211 and the variable type silicon steel sheets 212 a plurality of slot holes with gaps are punched. The slot holes with gaps can be hold in various shapes, usually they like the one illustrated in Fig. 3. The slot hole with gap in the periphery of the variable type silicon steel sheet 212 are bigger than that of the basic type silicon steel sheet 211. The coil 162 is wound between the two adjacent slot holes with gaps of the above-mentioned silicon steel sheets. Among them, the basic type silicon steel sheets 211 are arranged in the center of the main body 221, and at both ends the variable type silicon steel sheets are stacked. In this way, the end view of the main body 221 is shown in Fig. 7. When the coil is wound, referring to 8 Fig., a transition section E will be formed at each of the four angles of the main body 221, enabling the coil to be well wound on and clung closely to the silicon steel sheets, the practice decreases the bulk of the coil and increases the magnetic force produced by the motor rotor or stator, and the efficiency of the motor is improved too.

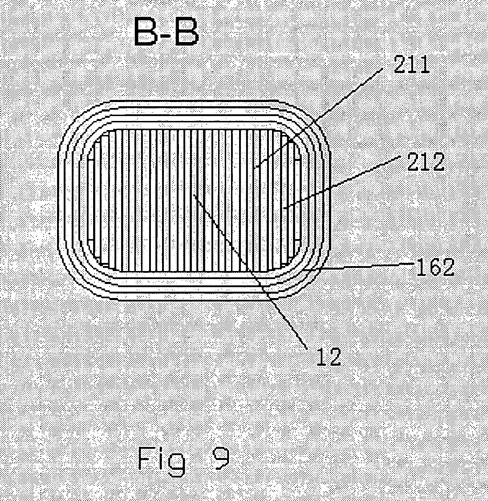

See Fig. 9, the difference between another embodiment for the motor stator 2 of the invention and the first embodiment is, the variable type silicon steel sheets 212 can be divided into several sets according to the size of the gap. From both ends of the main body, the size of the slot hole with gap in these sets varies constantly from big to small. In this way, a better transition section will be formed at the four angles of the main body 221, enabling the coil to be well wound on and clung closely to the silicon steel sheets, thus further improving the efficiency of the motor.

The scope of protection of the present invention is not intended to be limited to the above described preferred embodiments, and those skilled in the art are capable of making many changes and modifications on the basis of the above-mentioned embodiments. The present invention is intended to be limited only as set forth in the accompanying claims.

## Claims

1. A hub motor including:
- a motor shaft (1), which is fixed and non-rotational;
- a hub housing (11), which is connected to the motor shaft (1) via bearings;
- a stator (2) of the motor with windings, which are fixedly connected to the motor shaft (1),
wherein the hub motor further includes:
- an outer rotor (3) of the motor; and
- a quasi-planet reduction gear drive mechanism, which includes a sun gear (5), several planet gears (6), a ring gear (9) and a planet carrier (8), wherein the planet gear (5, 6, 8, 9) drives the hub housing (11) to rotate, **characterised in that** the sun gear (5) is fixedly connected to the outer rotor of the motor.

2. The hub motor as set forth in Claim 1, wherein the rotating shaft of the planet gear is fixed on the planet carrier, while the planet carrier (8) is fixedly connected to the motor shaft (1).

3. The hub motor as set forth in Claim 1, wherein the ring gear (9) and the hub housing (11) are connected via a one-way clutch.

4. The hub motor as set forth in Claim 1, wherein on the opening side of the bowl-shaped ring gear, a ring gear cover (91) is also provided, the ring gear is fixed with the ring gear in the periphery, and maintains a gap with the planet gear.

5. The hub motor as set forth in Claim 4, wherein a sealing ring (914) is provided between the outer surface of the ring gear cover and the neighboring part of the motor rotor.

6. The hub motor as set forth in Claim 1, wherein the stator core of the motor is made up of silicon steel sheets (161), in the periphery of the silicon steel sheet several slot holes with gaps are punched, and coils are wound between the neighboring slot holes, and wherein the silicon steel sheets include basic type silicon steel sheets (211) and variable silicon type steel sheets (212), the basic type steel sheets make up of the main body of the stator, and on both ends of the main body several variable silicon steel sheets are stacked, the sise of the slot hole with gap in the periphery of the variable type silicon steel sheet is bigger than that of the basic steel type silicon steel sheet, forming a ladder-like slot hole with variable cross section.

7. The hub motor as set forth in Claim 6, wherein the variable silicon steel sheets (212) can be divided into several sets, and from both ends to the center of the main body, the size of the slot hole with gap varies constantly from big to small, so that slot holes with gaps having gradually variable cross sections are formed.

## Patentansprüche

1. Nabenmotor, der enthält:
- eine Motorwelle (1), die feststeht und sich nicht dreht;
- ein Nabengehäuse (11), das über Lager mit der Motorwelle (1) verbunden ist,
- einen Stator (2) des Motors mit Wicklungen, die fest mit der Motorwelle (1) verbunden sind,
wobei der Nabenmotor ferner enthält:
- einen Außenrotor (3) der Motors; und
- einen Quasiplanetenuntersetzungsgetriebe-Antriebsmechanismus, der ein Sonnenrad (5), mehrere Planetenräder (6), ein Hohlrad (9) und einen Planetenträger (8) enthält, wobei das Planentenrad (5, 6, 8, 9) das Nabengehäuse (11) so antreibt, dass es sich dreht, **dadurch gekennzeichnet, dass**
das Sonnenrad (15) fest mit dem Außenrotor des Motors verbunden ist.

2. Nabenmotor gemäß Anspruch 1, bei dem die Drehwelle des Planetenrads an dem Planetenträger befestigt ist, während der Planetenträger (8) fest mit der Motorwelle (1) verbunden ist.

3. Nabenmotor gemäß Anspruch 1, bei dem das Hohlrad (9) und das Nabengehäuse (11) über eine Ein-Richtungs-Kupplung verbunden sind.

4. Nabenmotor gemäß Anspruch 1, bei dem auf der Öffnungsseite des napfförmigen Hohlrads außerdem eine Hohlradabdeckung (91) vorgesehen ist, wobei das Hohlrad mit dem Hohlrad in dem Umfang befestigt ist und einen Zwischenraum mit dem Planetenrad aufrechterhält.

5. Nabenmotor gemäß Anspruch 4, bei dem zwischen der Außenoberfläche der Hohlradabdeckung und dem benachbarten Teil des Motorrotors ein Dichtungsring (914) vorgesehen ist.

6. Nabenmotor gemäß Anspruch 1, bei dem der Statorkern des Motors aus Siliciumstahlblechen (161) hergestellt ist, wobei in dem Umfang des Siliciumstahlblechs mehrere Schlitzlöcher mit Zwischenräumen gestanzt sind und zwischen den benachbarten Schlitzlöcher Wicklungen gewickelt sind und wobei die Siliciumstahlbleche Siliciumstahlbleche (211) vom Grundtyp und Stahlbleche (212) vom Typ mit variablem Silicium enthalten, wobei die Stahlbleche vom Grundtyp aus dem Hauptkörper des Stators bestehen und an beiden Enden des Hauptkörpers mehrere variable Siliciumstahlbleche gestapelt sind, wobei die Größe des Schlitzlochs mit dem Zwischenraum in dem Umfang des Siliciumstahlblechs vom variablen Typ größer als die des Siliciumstahlblechs vom Grundstahltyp ist, wobei es ein leiterartiges Schlitzloch mit variablem Querschnitt bildet.

7. Nabenmotor gemäß Anspruch 6, bei dem die variablen Siliciumstahlbleche (212) in mehrere Sätze unterteilt werden können und bei dem die Größe des Schlitzlochs mit dem Zwischenraum von beiden Enden bis zur Mitte des Hauptkörpers konstant von klein nach groß variiert, sodass die Schlitzlöcher mit den Zwischenräumen mit allmählich variablen Querschnitten gebildet sind.

## Revendications

1. Moteur de moyeu comprenant :
- un arbre de moteur (1), qui est fixe et non rotatif ;
- un boîtier de moyeu (11) qui est raccordé à l'arbre de moteur (1) via des paliers ;
- un stator (2) du moteur avec des enroulements, qui sont raccordés de manière fixe à l'arbre de moteur (1),
- dans lequel le moteur de moyeu comprend en outre :
- un rotor externe (3) du moteur ; et
- un mécanisme d'entraînement d'engrenage de réduction quasiment planétaire, qui comprend un planétaire (5), plusieurs roues planétaires (6), une couronne (9) et un porte-satellites (8), dans lequel les roues planétaires (5, 6, 8, 9) entraînent le boîtier de moyeu (11) en rotation, **caractérisé en ce que** le planétaire (5) est raccordé de manière fixe au rotor externe du moteur.

2. Moteur de moyeu selon la revendication 1, dans lequel l'arbre rotatif de la roue planétaire est fixé sur le porte-satellites, alors que le porte-satellites (8) est raccordé de manière fixe à l'arbre de moteur (1).

3. Moteur de moyeu selon la revendication 1, dans lequel la couronne (9) et le boîtier de moyeu (11) sont raccordés via un engrenage unidirectionnel.

4. Moteur de moyeu selon la revendication 1, dans lequel est également prévu, du côté d'ouverture de la couronne en forme de bol, un couvercle (91) de couronne, la couronne est fixée avec la couronne dans la périphérie, et maintient un espace avec la roue planétaire.

5. Moteur de moyeu selon la revendication 4, dans lequel une bague d'étanchéité (914) est prévue entre la surface externe du couvercle de couronne et la partie voisine du rotor de moteur.

6. Moteur de moyeu selon la revendication 1, dans lequel le noyau de stator du moteur est composé de feuilles d'acier au silicium (161), dans la périphérie de la feuille d'acier au silicium, plusieurs trous de fente avec des espaces sont poinçonnés et des bobines sont enroulées entre les trous de fente voisins, et dans lequel les feuilles d'acier au silicium comprennent des feuilles d'acier au silicium de type basique (211) et des feuilles d'acier (212) au silicium de type variable, les feuilles d'acier de type basique se composent du corps principal du stator, et sur les deux extrémités du corps principal, plusieurs feuilles d'acier au silicium variable sont empilées, la taille du trou de fente avec l'espace dans la périphérie de la feuille d'acier au silicium de type variable est plus grande que celle de la feuille d'acier au silicium de type à acier basique, formant un trou de fente en forme d'échelle avec une section transversale variable.

7. Moteur de moyeu selon la revendication 6, dans lequel les feuilles d'acier au silicium variables (212) peuvent être divisées en plusieurs ensembles, et à partir des deux extrémités jusqu'au centre du corps principal, la taille du trou de fente avec l'espace varie de manière constante de grande à petite, de sorte que l'on forme des trous de fente avec des espaces ayant des sections transversales progressivement variables.
